# EUROPEAN PATENT SPECIFICATION

(11) **EP 0 716 188 B1**
(45) Date of publication and mention of the grant of the patent: **27.06.2001**
(21) Application number: 95850204.9
(22) Date of filing: 16.11.1995
(51) Int. Cl.: E02B 15/06

(54) **A rapid deployment oil boom**
Schnell auslegbare Ölsperre
Barrage d'huile flottant pour déploiement rapide

(30) Priority: 18.11.1994 SE 9404038
(43) Date of publication of application: 12.06.1996
(73) Proprietor: NorLense AS, 8317 Strönstad (NO)
(72) Inventor: Jensen, Ulf Jörgen, S-23022 Smygehamn (SE)
(74) Representative: Lundin, Björn-Eric

(56) References cited:
- SE-B- 429 143
- SE-B- 468 993
- US-A- 3 563 036
- US-A- 5 195 844
- US-A- 5 246 394

## Description

The present invention relates to an oil boom of the kind which includes an elongated hose-like buoyant body and inner inflatable distending elements which have the form of annular hoses attached to the buoyant body and which when inflated extend essentially around the inner circumference of the buoyant body and therewith expand said body to a hose-like configuration, said distending elements being connected to one another pressure-wise through other elongated hose elements.

Oil booms of this kind are known to the art and are described in our earlier patent specification SE-B-468993 and in corresponding US-A-5,246,394, these documents being incorporated as part of the present document.

Oil booms of this kind thus include hoses which are inflatable in the cross-direction of the boom and which function to distend a hose-like buoyant body that forms the actual oil barrier when the boom is in use. These oil booms are kept in readiness and stored wound on drums in a flat state and can be transported in this state on an oil-fighting vessel and filled with air with the aid of a compressor, from one or both ends of the boom. The annular hoses are inflated successively, as the boom is deployed.

There are occasions when it is desired to deploy oil booms at very short notice, for instance in the event of accidents involving oil tankers, so that any oil escaping from the tanker can be contained to the greatest possible extent. On occasions such as these, it must be possible to transport the booms as quickly as possible to the site of the accident or to the area in which immediate action is required. There may also be a need to deploy booms without the aid of air compressors or other sources of compressed air on the deployment site.

One object of the invention is to provide an oil boom which can be transported quickly to the site concerned, for instance by air, and deployed on site without requiring the use of an air compressor at the deployment site. Another object is to provide an oil boom which enables the capital cost of auxiliary equipment to be restricted, by virtue of enabling compressors and like apparatus to be installed in central depots instead of requiring each system to be connected to a separate isolated compressor.

The invention is characterized to this end by the features set forth in the following Claims.

Thus, the oil boom is rolled-up or packaged in some other way to form a boom pack which is secured by suitable means, at least when transported prior to being deployed at the intended deployment site. The annular hoses and their connecting hose elements are filled with air or some other suitable gas at a pressure which is effective to powerfully expand or distend the boom pack when the means that hold said pack together are loosened or removed, so that the boom will be brought to its intended state of use with no further assistance and therewith achieve its full length on the deployment site prior to being deployed.

The pressure of the fluid in the packed state of the boom will preferably be 10-20% higher than the predetermined pressure in the boom in its state of use. This predetermined pressure is adapted in accordance with the material from which the booms are made and in accordance with the construction of said booms, so that when in its state of use the boom will be sufficiently robust and stable to withstand the forces exerted thereon by harsh weather and rough seas. The material from which the booms are made and the structure of the booms may be in accordance with the aforesaid publication SE-B-468993 (or US-A-5,246,394), so as to achieve these requirements.

The oil beam may be held together in its rolled-up state or other packaged state in several different ways. For instance, the boom pack may be stored in a capsule, although it is preferred simply to "strap" the pack with strapping devices in the form of releasable straps. The releasable straps, or strops, may be arranged to release automatically at the moment of deploying the boom. When the boom is rolled-up, it is preferred that the boom is rolled around a cylindrical centre core or equivalent device.

The boom and the manner in which the boom is handled will now be described with reference to an example of use.

An oil boom is rolled-up around its longitudinal axis on a centre core to form a cylindrical pack. The pack is held together by release straps which are first placed around the cylindrical part of the pack and then optionally tightened mechanically. Air is pumped or pressed into the pack with the aid of filling hoses connected to the inflatable elements of the boom, namely the annular hoses and the elongated hose elements that connect said annular hoses. The pack is pressurized to a pressure which is 10-20% higher than the use pressure. The pressurized pack is then stored in some appropriate place, ready to be loaded onto an emergency aircraft or helicopter. When an alarm is received, an appropriate number of cylindrical packs are loaded onto the aircraft or helicopter and "primed" for quick and automatic release of the securing straps when the pack is thrown from the aircraft or helicopter. The pack will expand rapidly on the surface of the water to its full shape and is then ready to contain the oil slick until professional help arrives. Final containment of the oil slick can be effected with the aid of personnel in small boats, which may also be launched from the air, or with the aid of fast-moving boats that will quickly arrive at the scene of the oil slick.

The present invention thus enables "centrally" pressurized oil booms each having a length of 300-400 m for instance, to be transported quickly to the site of an oil slick or to an area in which an oil slick is imminent due to damage to an oil tanker or for some other reason, in a compact package which is automatically released and therewith rapidly expanded to its effective state, i.e. so that the packaged and stored air-pressure in the dynamic pressure vessel formed by hoses and hose elements is released.

## Claims

1. An oil boom of the kind which includes an elongated hose-like buoyant body and inner inflatable distending elements in the form of annular hoses attached to the buoyant body, wherein the annular hoses extend generally around the circumference of the buoyant body in their inflated state of use so as to distend the buoyant body to a hose-like form, and which are mutually connected together pressure-wise by other elongated hose elements, **characterized** in that at least when transported to its intended deployment site, the boom is in a rolled-up state or in some other packaged state which forms a boom pack that is held together by suitable means; and in that the annular hoses and their connecting hose elements are filled with air or some other appropriate gas at a pressure which when the boom is deployed and the boom-pack securing means have been loosened or released will cause the boom pack to expand rapidly to achieve its effective state of use and therewith essentially its full length.

2. An oil boom according to Claim 1, **characterized** in that the pressure in the boom pack is 10-20% higher than the predetermined pressure of the boom in its state of use.

3. An oil boom according to Claim 1 and Claim 2, **characterized** in that the boom-pack securing means comprise releasable straps or strops.

4. An oil boom according to Claim 3, **characterized** in that the releasable straps or strops are adapted to be released automatically at the moment of deploying the boom.

5. An oil boom according to Claims 1-4, **characterized** in that the boom is rolled-up around a centre core, to form a boom pack.

## Patentansprüche

1. Ölstoppschlauch der Art, welche einen länglichen schlauchartigen Schwimmkörper und innere aufblasbare Ausziehelemente in der Form ringförmiger, an dem Schwimmkörper befestigter Schläuche einschließt, wobei sich die ringförmigen Schläuche allgemein um den Umfang des Schwimmkörpers in ihrem aufgeblasenen Verwendungszustand erstrecken, um so den Schwimmkörper zu einer schlauchartigen Form auszuziehen, und die wechselseitig durch andere längliche Schlauchelemente druckmäßig miteinander verbunden sind, **dadurch gekennzeichnet,** daß sich der Stoppschlauch wenigstens dann, wenn er zu der Stelle seiner beabsichtigten Entfaltung transportiert wird, in einem aufgerollten Zustand oder einem anderen gepackten Zustand befindet, welcher ein Stoppschlauchpaket bildet, das durch geeignete Einrichtungen zusammengehalten wird, und die ringförmigen Schläuche und ihre Verbindungsschlauchelemente mit Luft oder einem anderen geeigneten Gas bei einem Druck gefüllt sind, welcher, wenn der Stoppschlauch entfaltet wird und die Befestigungseinrichtrungen des Stoppschlauchpaketes gelöst oder freigegeben wurden, bewirkt, daß sich das Stoppschlauchpaket rasch ausdehnt, um seinen wirksamen Verwendungszustand und damit im wesentlichen seine volle Länge zu erreichen.

2. Ölstoppschlauch nach Anspruch 1, **dadurch gekennzeichnet,** daß der Druck in dem Stoppschlauchpaket 10 bis 20 % höher als der vorbestimmte Druck des Stoppschlauches in seinem Verwendungszustand ist.

3. Ölstoppschlauch nach Anspruch 1 und Anspruch **2,'dadurch gekennzeichnet,** daß die Befestigungseinrichtungen des Stoppschlauchpaketes lösbare Bänder oder Schlingen umfaßt.

4. Ölstoppschlauch nach Anspruch 3, **dadurch gekennzeichnet,** daß die lösbaren Bänder oder Schlingen so ausgebildet sind, daß sie im Augenblick der Entfaltung des Stoppschlauches automatisch freigegeben werden.

5. Ölstoppschlauch nach den Ansprüchen 1 bis 4, **dadurch gekennzeichnet,** daß der Stoppschlauch um einen mittigen Kern unter Bildung eines Stoppschlauchpaketes aufgerollt ist.

## Revendications

1. Barrage d'huile flottant du genre qui inclut un corps flottant allongé en forme de tuyau et des éléments qui s'étendent sous forme de tuyaux annulaires dont l'intérieur est gonflable, attachés au corps flottant, où les tuyaux annulaires s'étendent en général autour de la circonférence du corps flottant dans leur état d'utilisation gonflé afin d'étendre le corps flottant jusqu'à adopter une forme de tuyau, et lesquels sont réciproquement connectés à une pression adéquate par d'autres éléments de tuyau allongés, **caractérisé** en ce qu'au moins quand il est transporté jusqu'à sa zone prévue de déploiement, le barrage est sous un état enroulé ou sous d'autres états d'emballage formant un paquet de barrage qui est maintenu ensemble par des moyens appropriés; et dans lequel les tuyaux annulaires et leurs éléments connecteurs en forme de tuyau sont remplis avec de l'air ou un autre gaz approprié à une pression à laquelle, lorsque le barrage est déployé et les moyens de sécurité du paquet de barrage ont été perdus ou libérés, le paquet de barrage s'étendra rapidement pour atteindre son état efficace d'utilisation et par conséquent, sa longueur totale.

2. Barrage d'huile flottant selon la revendication 1, **caractérisé** en ce que la pression dans le paquet de barrage est entre un 10 et un 20% supérieure à la pression prédéterminée du barrage dans son état d'utilisation.

3. Barrage d'huile flottant selon la revendication 1 et la revendication 2, **caractérisé** en ce que les moyens de sécurité du paquet de barrage incluent des brides ou des estropes détachables.

4. Barrage d'huile flottant selon la revendication 3, **caractérisé** en ce que les brides ou les estropes détachables sont adaptées pour être automatiquement libérées au moment du déploiement du barrage.

5. Barrage d'huile flottant selon les revendications 1-4, **caractérisé** en ce que le barrage est enroulé autour d'un noyau central, pour former un paquet de barrage.
